(19) **Europäisches Patentamt European Patent Office Office européen des brevets**

(11) **EP 4 280 772 A1**

(12) **EUROPEAN PATENT APPLICATION**
published in accordance with Art. 153(4) EPC

(43) Date of publication:
**22.11.2023 Bulletin 2023/47**

(21) Application number: **22739706.4**

(22) Date of filing: **13.01.2022**

(51) International Patent Classification (IPC):
**H04W 72/12** (2023.01)    **H04W 72/14** (2009.01)
**H04W 72/04** (2023.01)    **H04B 7/06** (2006.01)
**H04B 7/0408** (2017.01)    **H04B 7/0404** (2017.01)
**H04W 76/27** (2018.01)

(52) Cooperative Patent Classification (CPC):
**H04B 7/0404; H04B 7/0408; H04B 7/06;
H04W 72/04; H04W 72/12; H04W 72/23;
H04W 76/27**

(86) International application number:
**PCT/KR2022/000631**

(87) International publication number:
**WO 2022/154511 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.01.2021 KR 20210005541**

(71) Applicant: **LG Electronics Inc.
Yeongdeungpo-gu
Seoul 07336 (KR)**

(72) Inventors:
• **KIM, Jaehyung**
  **Seoul 06772 (KR)**
• **LEE, Youngdae**
  **Seoul 06772 (KR)**
• **AHN, Joonkui**
  **Seoul 06772 (KR)**
• **KANG, Jiwon**
  **Seoul 06772 (KR)**

(74) Representative: **Plasseraud IP
66, rue de la Chaussée d'Antin
75440 Paris Cedex 09 (FR)**

(54) **METHOD FOR TRANSMITTING OR RECEIVING PUSCH IN WIRELESS COMMUNICATION SYSTEM AND DEVICE THEREFOR**

(57) The present disclosure proposes a method for transmitting or receiving a PUSCH in a wireless communication system, and a device therefor. A method performed by a terminal may comprise the steps of: receiving, from a base station, configuration information including information on an uplink resource and information on multiple beams corresponding to the uplink resource; determining an optimal beam among the multiple beams on the basis of an RSRP; and transmitting the PUSCH to the base station on the uplink resource on the basis of a transmission beam corresponding to the optimal beam in an RRC idle state or RRC inactive state.

[FIG. 9]

**Description**

**BACKGROUND OF INVENTION**

Field of the invention

The present disclosure relates to a wireless communication system, and particularly, to a method for transmitting or receiving a physical uplink shared channel (PUSCH), and a device therefor.

Related Art

Mobile communication systems have been developed to provide a voice service while ensuring the activity of a user. However, in the mobile communication system, not only a voice, but also a data service is extended. At present, there is a shortage of resources due to an explosive increase in traffic, and users demand a higher speed service. As a result, a more advanced mobile communication system is required.

Requirements for a next-generation mobile communication system should be able to support the acceptance of explosive data traffic, a dramatic increase in the per-user data rate, the acceptance of a significant increase in the number of connected devices, very low end-to-end latency, and high-energy efficiency. To this end, various technologies are researched, which include dual connectivity, massive multiple input multiple output (MIMO), in-band full duplex, non-orthogonal multiple access (NOMA), super wideband support, device networking, and the like.

Meanwhile, techniques for transmitting or receiving data in a radio resource control (RRC) idle state are being discussed.

**SUMMARY**

The present disclosure provides a method of transmitting or receiving an uplink channel (or information/data) without transition from an RRC idle state or an RRC inactive state to a connected state, and a device therefor.

The present disclosure also provides a method of determining an optimal beam for transmitting or receiving an uplink channel (or information/data) in the RRC idle state or RRC inactive state, and a device therefor.

The present disclosure also provides a method of efficiently transmitting or receiving infrequent small data in the RRC idle state or RRC inactive state, and a device therefor.

Technical objects to be achieved in the disclosure are not limited to the aforementioned technical objects, and other technical objects not described above may be evidently understood by a person having ordinary skill in the art to which the disclosure pertains from the following description.

In an aspect, a method of transmitting a physical uplink shared channel (PUSCH)in a wireless communication system is provided. A method performed by a terminal may comprise the steps of: receiving, from a base station, configuration information including information on an uplink resource and information on multiple beams corresponding to the uplink resource; determining an optimal beam among the multiple beams on the basis of an RSRP; and transmitting the PUSCH to the base station on the uplink resource on the basis of a transmission beam corresponding to the optimal beam in an RRC idle state or RRC inactive state.

Further, in the method of the present disclosure, the information on the multiple beams may include one or more synchronization signal block (SSB) indexes or one or more channel state information-reference signal (CSI-RS) resource indexes.

Further, the method of the present disclosure may further include receiving, from the BS, multiple synchronization signal blocks (SSBs) for determining the optimal beam.

Further, the method of the present disclosure may further include transmitting, to the BS, a request for the configuration information in an RRC connected state.

Further, in the method of the present disclosure, the configuration information may be received in the RRC connected state.

Further, in another aspect, provided is a UE configured to transmit a physical uplink shared channel (PUSCH) in a wireless communication system, which may include: at least one transceiver; at least one processor; and at least one memory operatively connected to the at least one processor, and storing instructions of performing operations based on being executed based on the at least one processor, in which the operations may include receiving, from a base station (BS), configuration information including information on an uplink resource and information on multiple beams corresponding to the uplink resource, determining an optimal beam among the multiple beams based on a reference signal received power (RSRP), and transmitting, to the BS, the PUSCH on the uplink resource based on a transmission beam corresponding to the optimal beam in an RRC idle state or RRC inactive state.

Further, in the UE of the present disclosure, the information on the multiple beams may include one or more synchronization signal block (SSB) indexes or one or more channel state information-reference signal (CSI-RS) resource indexes.

Further, in the UE of the present disclosure, the operations may further include receiving, from the BS, multiple synchronization signal blocks (SSBs) for determining the optimal beam.

Further, in the UE of the present disclosure, the configuration information may be received in the RRC connected state.

In yet another aspect, a method of receiving a physical uplink shared channel (PUSCH) in a wireless communication system is provided. A method performed by a BS may include: transmitting, to a UE, configuration information including information on an uplink resource and information on multiple beams corresponding to the uplink resource; performing blind detection based on the multiple beams in a radio resource control (RRC) idle state or an RRC inactive state; and receiving, from the UE, the PUSCH in the uplink resource based on at least one beam among the multiple beams in the RRC idle state or the RRC inactive state.

Further, in the method of the present disclosure, the information on the multiple beams may include one or more synchronization signal block (SSB) indexes or one or more channel state information-reference signal (CSI-RS) resource indexes.

Further, the method of the present disclosure may further include transmitting, to the UE, multiple synchronization signal blocks (SSBs) for determining the optimal beam.

Further, the method of the present disclosure may further include receiving, from the UE, a request for the configuration information in an RRC connected state.

Further, in the method of the present disclosure, the configuration information may be transmitted in the RRC connected state.

Further, in still yet another aspect, provided is a BS configured to receive a physical uplink shared channel (PUSCH) in a wireless communication system, which may include: at least one transceiver; at least one transceiver; at least one processor; and at least one memory operatively connected to the at least one processor, and storing instructions of performing operations based on being executed based on the at least one processor, in which the operations may include transmitting, to a UE, configuration information including information on an uplink resource and information on multiple beams corresponding to the uplink resource, performing blind detection based on the multiple beams in a radio resource control (RRC) idle state or an RRC inactive state, and receiving, from the UE, the PUSCH in the uplink resource based on at least one beam among the multiple beams in the RRC idle state or the RRC inactive state.

Further, in the BS of the present disclosure, the information on the multiple beams may include one or more synchronization signal block (SSB) indexes or one or more channel state information-reference signal (CSI-RS) resource indexes.

Further, in the BS of the present disclosure, the operations may further include transmitting, to the UE, multiple synchronization signal blocks (SSBs) for determining the optimal beam.

Further, in the BS of the present disclosure, the configuration information may be transmitted in the RRC connected state.

Further, in still yet another aspect, provided is a processing apparatus configured to control a UE to transmit a physical uplink shared channel (PUSCH) in a wireless communication system, which may include: at least one processor; and at least one memory operatively connected to the at least one processor, and storing instructions of performing operations based on being executed based on the at least one processor, in which the operations may include receiving, from a base station (BS), configuration information including information on an uplink resource and information on multiple beams corresponding to the uplink resource, determining an optimal beam among the multiple beams based on a reference signal received power (RSRP), and transmitting, to the BS, the PUSCH on the uplink resource based on a transmission beam corresponding to the optimal beam in a radio resource control (RRC) idle state or RRC inactive state.

Further, as still yet another aspect, in a computer-readable storage medium storing at least one instruction of allowing, based on being executed based on at least one processor, the at least one processor to control operations, the operation may include: receiving, from a base station (BS), configuration information including information on an uplink resource and information on multiple beams corresponding to the uplink resource; determining an optimal beam among the multiple beams based on a reference signal received power (RSRP), and transmitting, to the BS, a physical uplink shared channel (PUSCH) on the uplink resource based on a transmission beam corresponding to the optimal beam in a radio resource control (RRC) idle state or RRC inactive state.

According to the present disclosure, an uplink channel (or information/data) is transmitted or received without transmission from an RRC idle state or an RRC inactive state to a connected state to improve signaling overhead and UE power consumption.

Further, according to the present disclosure, an optimal beam for transmitting or receiving an uplink channel (or information/data) is determined in the RRC idle state or RRC inactive state to improve communication reliability.

Further, according to the present disclosure, infrequent small data can be efficiently transmitted or received in the RRC idle state or RRC inactive state.

Effects which may be obtained from the disclosure are not limited by the above effects, and other effects that have not been mentioned may be clearly understood from the following description by those skilled in the art to which the disclosure pertains.

**BRIEF DESCRIPTION OF THE DRAWINGS**

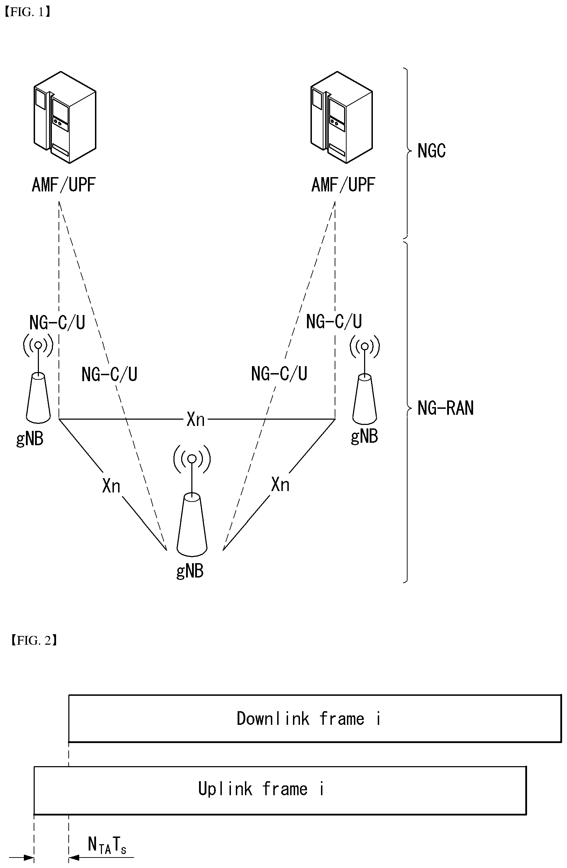

FIG. 1 illustrates a wireless communication system to which the present disclosure is applied. The accompany drawings, which are included to provide a further understanding of the disclosure and are incorporated on and constitute a part of this disclosure illustrate embodiments of the disclosure and together with the description serve to explain the principles of the disclosure.

FIG. 1 is a diagram illustrating an example of an overall system structure of NR to which a method proposed in the disclosure may be applied.

FIG. 2 illustrates a relationship between an uplink frame and a downlink frame in a wireless communication system to which a method proposed in the disclosure may be applied.

FIG. 3 illustrates an example of a frame structure in an NR system.

FIG. 4 illustrates an example of a resource grid supported by a wireless communication system to which a method proposed in the disclosure may be applied.

FIG. 5 illustrates a slot structure of an NR frame to which a method described in the present disclosure is applicable.

FIG. 6 illustrates examples of a resource grid per antenna port and numerology to which a method described in the present disclosure is applicable.

FIG. 7 illustrates physical channels and general signal transmission used in a 3GPP system.

FIG. 8 illustrates a PUR transmission resource configuration.

FIG. 9 is a flow chart illustrating an operation method of a UE described in the present disclosure.

FIG. 10 is a flow chart illustrating an operation method of a base station described in the present disclosure.

FIG. 11 illustrates a communication system (1) applied to the disclosure.

FIG. 12 illustrates a wireless device which may be applied to the disclosure.

FIG. 13 illustrates another example of a wireless device applied to the disclosure.

FIG. 14 illustrates a portable device applied to the disclosure.

**DESCRIPTION OF EXEMPLARY EMBODIMENTS**

Reference will now be made in detail to embodiments of the disclosure, examples of which are illustrated in the accompanying drawings. A detailed description to be disclosed below together with the accompanying drawing is to describe exemplary embodiments of the disclosure and not to describe a unique embodiment for carrying out the disclosure. The detailed description below includes details to provide a complete understanding of the disclosure. However, those skilled in the art know that the disclosure may be carried out without the details.

In some cases, in order to prevent a concept of the disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various radio access system including CDMA, FDMA, TDMA, OFDMA, SC-FDMA, and the like. The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro.

For clarity of description, the technical spirit of the disclosure is described based on the 3GPP communication system (e.g., LTE-A or NR), but the technical spirit of the disclosure are not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system, "xxx" means a detailed standard document number. The LTE/NR may be collectively referred to as the 3GPP system. Matters disclosed in a standard document opened before the disclosure may be referred to for a background art, terms, omissions, etc., used for describing the disclosure. For example, the following documents may be referred to.

3GPP LTE

- 36.211: Physical channels and modulation
- 36.212: Multiplexing and channel coding
- 36.213: Physical layer procedures
- 36.300: Overall description
- 36.331: Radio Resource Control (RRC)

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/UE sensitive to reliability and latency is being discussed. The introduction of next generation radio access technology considering enhanced mobile broadband communication (eMBB), massive MTC (mMTC), ultra-reliable and low latency communication (URLLC) is discussed, and in the disclosure, the technology is called new RAT for convenience. The NR is an expression representing an example of 5G radio access technology (RAT).

Three major requirement areas of 5G include (1) an enhanced mobile broadband (eMBB) area, (2) a massive machine type communication (mMTC) area and (3) an ultra-reliable and low latency communications (URLLC) area.

Some use cases may require multiple areas for optimization, and other use case may be focused on only one key performance indicator (KPI). 5G support such various use cases in a flexible and reliable manner.

eMBB is far above basic mobile Internet access and covers media and entertainment applications in abundant bidirectional tasks, cloud or augmented reality. Data is one of key motive powers of 5G, and dedicated voice services may not be first seen in the 5G era. In 5G, it is expected that voice will be processed as an application program using a data connection simply provided by a communication system. Major causes for an increased traffic volume include an increase in the content size and an increase in the number of applications that require a high data transfer rate. Streaming service (audio and video), dialogue type video and mobile Internet connections will be used more widely as more devices are connected to the Internet. Such many application programs require connectivity always turned on in order to push real-time information and notification to a user. A cloud storage and application suddenly increases in the mobile communication platform, and this may be applied to both business and entertainment. Furthermore, cloud storage is a special use case that tows the growth of an uplink data transfer rate. 5G is also used for remote business of cloud. When a tactile interface is used, further lower end-to-end latency is required to maintain excellent user experiences. Entertainment, for example, cloud game and video streaming are other key elements which increase a need for the mobile broadband ability. Entertainment is essential in the smartphone and tablet anywhere including high mobility environments, such as a train, a vehicle and an airplane. Another use case is augmented reality and information search for entertainment. In this case, augmented reality requires very low latency and an instant amount of data.

Furthermore, one of the most expected 5G use case relates to a function capable of smoothly connecting embedded sensors in all fields, that is, mMTC. Until 2020, it is expected that potential IoT devices will reach 20.4 billion. The industry IoT is one of areas in which 5G performs major roles enabling smart city, asset tracking, smart utility, agriculture and security infra.

URLLC includes a new service which will change the industry through remote control of major infra and a link having ultra-reliability/low available latency, such as a self-driving vehicle. A level of reliability and latency is essential for smart grid control, industry automation, robot engineering, drone control and adjustment.

Multiple use cases are described more specifically.

5G may supplement fiber-to-the-home (FTTH) and cable-based broadband (or DOCSIS) as means for providing a stream evaluated from gigabits per second to several hundreds of mega bits per second. Such fast speed is necessary to deliver TV with resolution of 4K or more (6K, 8K or more) in addition to virtual reality and augmented reality. Virtual reality (VR) and augmented reality (AR) applications include immersive sports games. A specific application program may require a special network configuration. For example, in the case of VR game, in order for game companies to minimize latency, a core server may need to be integrated with the edge network server of a network operator.

An automotive is expected to be an important and new motive power in 5G, along with many use cases for the mobile communication of an automotive. For example, entertainment for a passenger requires a high capacity and a high mobility mobile broadband at the same time. The reason for this is that future users continue to expect a high-quality connection regardless of their location and speed. Another use example of the automotive field is an augmented reality dashboard. The augmented reality dashboard overlaps and displays information, identifying an object in the dark and notifying a driver of the distance and movement of the object, over a thing seen by the driver through a front window. In the future, a wireless module enables communication between automotives, information exchange between an automotive and a supported infrastructure, and information exchange between an automotive and other connected devices (e.g., devices accompanied by a pedestrian). A safety system guides alternative courses of a behavior so that a driver may drive more safely, thereby reducing a danger of an accident. A next step will be a remotely controlled or self-driven vehicle. This requires very reliable, very fast communication between different self-driven vehicles and between an automotive and infra. In the future, a self-driven vehicle may perform all driving activities, and a driver will be focused on things other than traffic, which cannot be identified by an automotive itself. Technical requirements of a self-driven vehicle require ultra-low latency and ultra-high speed reliability so that traffic safety is increased up to a level which cannot be achieved by a person.

A smart city and smart home mentioned as a smart society will be embedded as a high-density radio sensor network. The distributed network of intelligent sensors will identify the cost of a city or home and a condition for energy-efficient maintenance. A similar configuration may be performed for each home. All of a temperature sensor, a window and heating controller, a burglar alarm and home appliances are wirelessly connected. Many of such sensors are typically a low data transfer rate, low energy and a low cost. However, for example, real-time HD video may be required for a specific type of device for surveillance.

The consumption and distribution of energy including heat or gas are highly distributed and thus require automated control of a distributed sensor network. A smart grid collects information, and interconnects such sensors using digital information and a communication technology so that the sensors operate based on the information. The information may include the behaviors of a supplier and consumer, and thus the smart grid may improve the distribution of fuel, such as electricity, in an efficient, reliable, economical, production-sustainable and automated manner. The smart grid may be considered to be another sensor network having small latency.

A health part owns many application programs which reap the benefits of mobile communication. A communication system may support remote treatment providing clinical treatment at a distant place. This helps to reduce a barrier for the distance and may improve access to medical services which are not continuously used at remote farming areas. Furthermore, this is used to save life in important treatment and an emergency condition. A radio sensor network based on mobile communication may provide remote monitoring and sensors for parameters, such as the heart rate and blood pressure.

Radio and mobile communication becomes increasingly important in the industry application field. Wiring requires a high installation and maintenance cost. Accordingly, the possibility that a cable will be replaced with reconfigurable radio links is an attractive opportunity in many industrial fields. However, to achieve the possibility requires that a radio connection operates with latency, reliability and capacity similar to those of the cable and that management is simplified. Low latency and a low error probability is a new requirement for a connection to 5G.

Logistics and freight tracking is an important use case for mobile communication, which enables the tracking inventory and packages anywhere using a location-based information system. The logistics and freight tracking use case typically requires a low data speed, but a wide area and reliable location information.

In a new RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. Different numerologies may be defined by scaling reference subcarrier spacing to an integer N.

### Definition of terms

eLTE eNB: The eLTE eNB is the evolution of eNB that supports connectivity to EPC and NGC.

gNB: A node which supports the NR as well as connectivity to NGC.

New RAN: A radio access network which supports either NR or E-UTRA or interfaces with the NGC.

Network slice: A network slice is a network created by the operator customized to provide an optimized solution for a specific market scenario which demands specific requirements with end-to-end scope.

Network function: A network function is a logical node within a network infrastructure that has well-defined external interfaces and well-defined functional behavior.

NG-C: A control plane interface used on NG2 reference points between new RAN and NGC.

NG-U: A user plane interface used on NG3 references points between new RAN and NGC.

Non-standalone NR: A deployment configuration where the gNB requires an LTE eNB as an anchor for control plane connectivity to EPC, or requires an eLTE eNB as an anchor for control plane connectivity to NGC.

Non-standalone E-UTRA: A deployment configuration where the eLTE eNB requires a gNB as an anchor for control plane connectivity to NGC.

User plane gateway: A termination point of NG-U interface.

### Abbreviation definition

UE: User Equipment
MO: Mobile Originated
MT: Mobile Terminated
PUR: Preconfigured UL Resource
CG: Configured Grant
SSB: Synchronization Signal Block
UL: Uplink
DL: Downlink
RRC IE: Radio Resource Control Information Element
SRI: SRS Resource Indicator
CRI: CSI-RS Resource Indicator
SSBRI: SSB Resource Indicator
RSRP: Reference Signal Received Power
BD: Blind Detection
RACH: Random Access Channel

### Overview of system

FIG. 1 illustrates an example of an overall structure of a NR system to which a method proposed in the disclosure is applicable..

Referring to FIG. 1, an NG-RAN consists of gNBs that provide an NG-RA user plane (new AS sublayer/PDCP/RLC/MAC/PHY) and control plane (RRC) protocol terminations for a user equipment (UE).

The gNBs are interconnected with each other by means of an Xn interface.

The gNBs are also connected to an NGC by means of an NG interface.

More specifically, the gNBs are connected to an access and mobility management function (AMF) by means of an N2 interface and to a user plane function (UPF) by means of an N3 interface.

### New Rat (NR) Numerology and Frame Structure

In the NR system, multiple numerologies may be supported. The numerologies may be defined by subcarrier spacing and a CP (Cyclic Prefix) overhead. Spacing between the plurality of subcarriers may be derived by scaling basic subcarrier spacing into an integer N (or $\mu$). In addition, although a very low subcarrier spacing is assumed not to be used at a very high subcarrier frequency, a numerology to be used may be selected independent of a frequency band.

In addition, in the NR system, a variety of frame structures according to the multiple numerologies may be supported.

Hereinafter, an orthogonal frequency division multiplexing (OFDM) numerology and a frame structure, which may be considered in the NR system, will be described.

A plurality of OFDM numerologies supported in the NR system may be defined as in Table 1.

[Table 1]

| $\mu$ | $\Delta f = 2^{\mu} \cdot 15$[kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

The NR supports multiple numerologies (or subcarrier spacing (SCS)) for supporting various 5G services. For example, when the SCS is 15 kHz, a wide area in traditional cellular bands is supported and when the SCS is 30 kHz/60 kHz, dense-urban, lower latency, and wider carrier bandwidth are supported, and when the SCS is more than 60 kHz, a bandwidth larger than 24.25 GHz is supported in order to overcome phase noise.

An NR frequency band is defined as frequency ranges of two types (FR1 and FR2). FR1 and FR2 may be configured as shown in Table 2 below. Further, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in the NR system, a size of various fields in the time domain is expressed as a multiple of a time unit of $T_s = 1/(\Delta f_{max} \cdot N_f)$. In this case, $\Delta f_{max} = 480 \cdot 10^3$, and $N_f = 4096$. DL and UL transmission is configured as a radio frame having a section of $T_f = (\Delta f_{max} N_f/100) \cdot T_s = 10$ms. The radio frame is composed of ten subframes each having a section of $T_{sf} = (\Delta f_{max} N_f/1000) \cdot T_s = 1$ms. In this case, there may be a set of UL frames and a set of DL frames.

FIG. 2 illustrates a relation between an uplink frame and a downlink frame in a wireless communication system to which a method proposed in the disclosure is applicable.

As illustrated in FIG. 2, uplink frame number i for transmission from a user equipment (UE) shall start $T_{TA} = N_{TA}T_s$ before the start of a corresponding downlink frame at the corresponding UE.

Regarding the numerology $\mu$, slots are numbered in increasing order of $n_s^{\mu} \in \left\{0,..., N_{subframe}^{slots,\mu} - 1\right\}$ within a subframe and are numbered in increasing order of $n_{s,f}^{\mu} \in \left\{0,..., N_{frame}^{slots,\mu} - 1\right\}$ within a radio frame. One slot consists of consecutive OFDM symbols of $N_{symb}^{\mu}$, and $N_{symb}^{\mu}$ is determined depending on a numerology used and slot configuration. The start of slots $n_s^{\mu}$ in a subframe is aligned in time with the start of OFDM symbols $n_s^{\mu} N_{symb}^{\mu}$ in the same subframe.

Not all UEs are able to transmit and receive at the same time, and this means that not all OFDM symbols in a downlink slot or an uplink slot are available to be used.

Table 3 represents the number $N_{symb}^{slot}$ of OFDM symbols per slot, the number $N_{slot}^{frame,\mu}$ of slots per radio frame, and the number $N_{\text{slot}}^{\text{subframe}, \mu}$ of slots per subframe in a normal CP. Table 4 represents the number of OFDM symbols per slot, the number of slots per radio frame, and the number of slots per subframe in an extended CP.

[Table 3]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

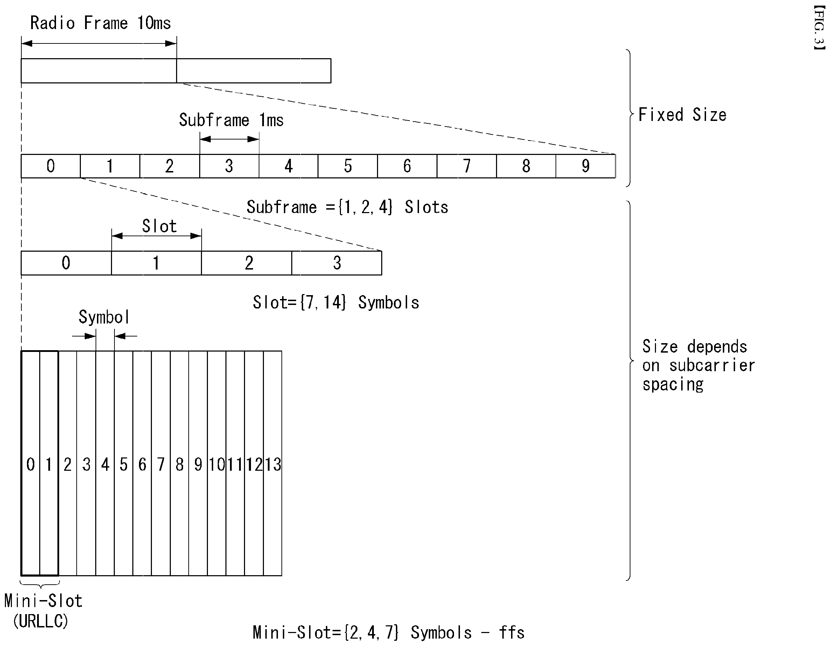

FIG. 3 illustrates an example of a frame structure in a NR system. FIG. 3 is merely for convenience of explanation and does not limit the scope of the disclosure.

In Table 4, in case of $\mu$ =2, i.e., as an example in which a subcarrier spacing (SCS) is 60 kHz, one subframe (or frame) may include four slots with reference to Table 3, and one subframe = {1, 2, 4} slots shown in FIG. 3, for example, the number of slot(s) that may be included in one subframe may be defined as in Table 3.

Further, a mini-slot may consist of 2, 4, or 7 symbols, or may consist of more symbols or less symbols.

In regard to physical resources in the NR system, an antenna port, a resource grid, a resource element, a resource block, a carrier part, etc. May be considered.

Hereinafter, the above physical resources that may be considered in the NR system are described in more detail.

First, in regard to an antenna port, the antenna port is defined so that a channel over which a symbol on an antenna port is conveyed may be inferred from a channel over which another symbol on the same antenna port is conveyed. When large-scale properties of a channel over which a symbol on one antenna port is conveyed may be inferred from a channel over which a symbol on another antenna port is conveyed, the two antenna ports may be regarded as being in a quasi co-located or quasi co-location (QC/QCL) relation. Here, the large-scale properties may include at least one of delay spread, Doppler spread, frequency shift, average received power, and received timing.

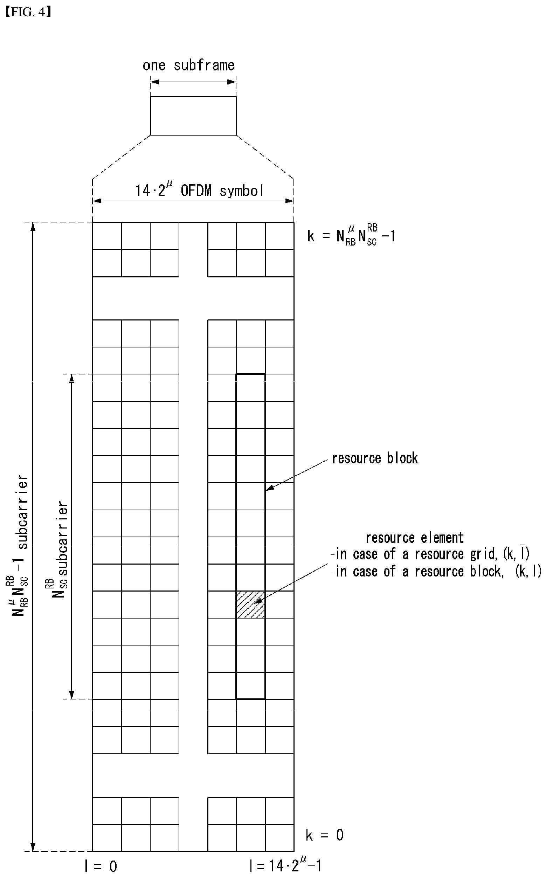

FIG. 4 illustrates an example of a resource grid supported in a wireless communication system to which a method proposed in the disclosure is applicable.

Referring to FIG. 4, a resource grid consists of $N_{\text{RB}}^{\mu} N_{\text{sc}}^{\text{RB}}$ subcarriers on a frequency domain, each subframe consisting of $14 \cdot 2^{\mu}$ OFDM symbols, but the disclosure is not limited thereto.

In the NR system, a transmitted signal is described by one or more resource grids, consisting of $N_{\text{RB}}^{\mu} N_{\text{sc}}^{\text{RB}}$ subcarriers, and $2^{\mu} N_{\text{symb}}^{(\mu)}$ OFDM symbols, where $N_{\text{RB}}^{\mu} \leq N_{\text{RB}}^{\max,\mu}$. $N_{\text{RB}}^{\max,\mu}$ denotes a maximum transmission bandwidth and may change not only between numerologies but also between uplink and downlink.

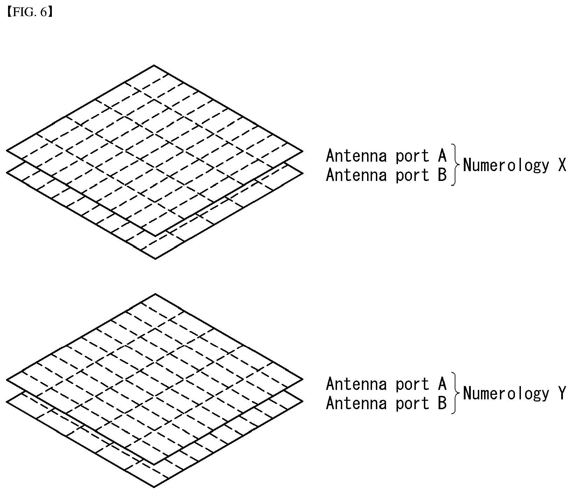

In this case, as illustrated in FIG. 6, one resource grid may be configured per numerology $\mu$ and antenna port p.

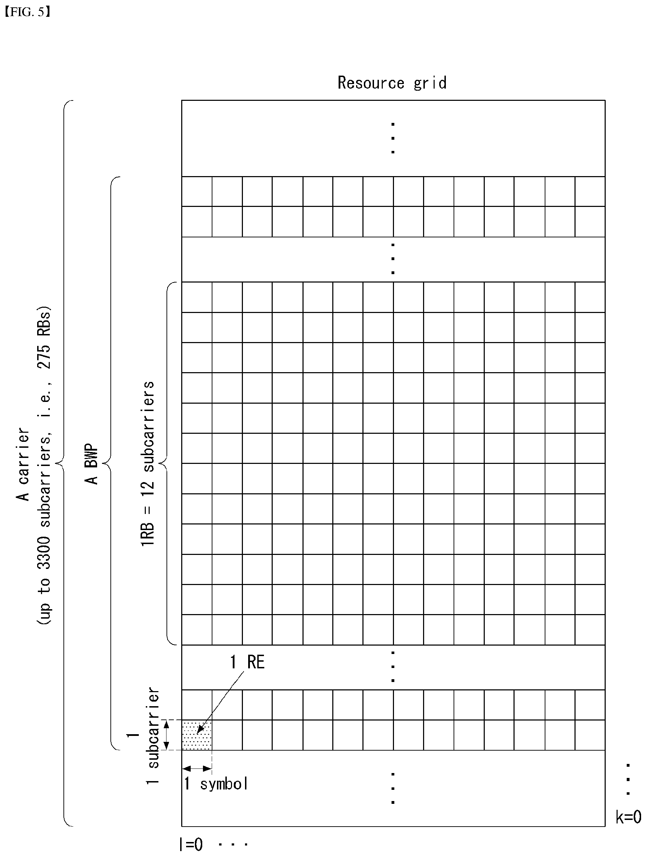

FIG. 5 illustrates a slot structure of an NR frame to which a method described in the present disclosure is applicable.

A slot includes a plurality of symbols in a time domain. For example, in a normal CP, one slot includes 7 symbols, and in an extended CP, one slot includes 6 symbols. A carrier includes a plurality of subcarriers in a frequency domain. A resource block (RB) may be defined as a plurality of consecutive subcarriers (e.g., 12 subcarriers) in the frequency domain. A bandwidth part (BWP) may be defined as a plurality of consecutive (physical) RBs ((P)RBs) in the frequency domain, and the BWP may correspond to one numerology (e.g., SCS, CP length, etc.). A carrier may include up to N BWPs (e.g., 5 BWPs). Data communication may be performed via an activated BWP, and only one BWP may be activated for one UE. Each element in a resource grid may be referred to as a resource element (RE), and one complex symbol may be mapped to each element.

FIG. 6 illustrates examples of a resource grid per antenna port and numerology to which a method described in the present disclosure is applicable.

Each element of the resource grid for the numerology $\mu$ and the antenna port p is called a resource element and is uniquely identified by an index pair $(k, \bar{l})$, where $k = 0,..., N_{\mathrm{RB}}^{\mu} N_{\mathrm{sc}}^{\mathrm{RB}} - 1$ is an index on a frequency domain, and

$$\bar{l} = 0,...,2^{\mu} N_{\mathrm{symb}}^{(\mu)} - 1$$

refers to a location of a symbol in a subframe. The index pair $(k,l)$ is used to refer to a resource element in a slot, where $l = 0,...,N_{\mathrm{symb}}^{\mu} - 1$.

The resource element $(k, \bar{l})$ for the numerology $\mu$ and the antenna port p corresponds to a complex value $a_{k,\bar{l}}^{(p,\mu)}$. When there is no risk for confusion or when a specific antenna port or numerology is not specified, the indices p and $\mu$ may be dropped, and as a result, the complex value may be $a_{k,\bar{l}}^{(p)}$ or $a_{k,\bar{l}}$.

Further, a physical resource block is defined as $N_{\mathrm{sc}}^{\mathrm{RB}} = 12$ consecutive subcarriers in the frequency domain.

Point A serves as a common reference point of a resource block grid and may be obtained as follows.

**[0100]** - offsetToPointA for PCell downlink represents a frequency offset between the point A and a lowest subcarrier of a lowest resource block that overlaps a SS/PBCH block used by the UE for initial cell selection, and is expressed in units of resource blocks assuming 15 kHz subcarrier spacing for FR1 and 60 kHz subcarrier spacing for FR2;

**[0101]** - absoluteFrequencyPointA represents frequency-location of the point A expressed as in absolute radio-frequency channel number (ARFCN);

The common resource blocks are numbered from 0 and upwards in the frequency domain for subcarrier spacing configuration $\mu$.

The center of subcarrier 0 of common resource block 0 for the subcarrier spacing configuration $\mu$ coincides with "point A". A common resource block number $n_{\mathrm{CRB}}^{\mu}$ in the frequency domain and resource elements (k, l) for the subcarrier spacing configuration $\mu$ may be given by the following Equation 1.

[Equation 1]

$$n_{\mathrm{CRB}}^{\mu} = \left\lfloor \frac{k}{N_{\mathrm{sc}}^{\mathrm{RB}}} \right\rfloor$$

Here, $k$ may be defined relative to the point A so that $k = 0$ corresponds to a subcarrier centered around the point A. Physical resource blocks are defined within a bandwidth part (BWP) and are numbered from 0 to $N_{\mathrm{BWP},i}^{\mathrm{size}} - 1$, where $i$ is No. Of the BWP. A relation between the physical resource block $n_{\mathrm{NPRB}}$ in BWP $i$ and the common resource block $n_{\mathrm{CRB}}$ may be given by the following Equation 2.

[Equation 2]

$$n_{\mathrm{CRB}} = n_{\mathrm{PRB}} + N_{\mathrm{BWP},i}^{\mathrm{start}}$$

Here, $N_{\mathrm{BWP},i}^{\mathrm{start}}$ may be the common resource block where the BWP starts relative to the common resource block 0.

### Bandwidth part (BWP)

The NR system may support up to 400 MHz per carrier. If a UE which operates in a wideband carrier operates while continuously turning on a radio frequency (RF) module for all carriers, UE battery consumption may increase. Alternatively, when several use cases (e.g., eMBB, URLLC, Mmtc, V2X, etc.) which operate in one wideband carrier are considered, different numerologies (e.g., sub-carrier spacing) may be supported for each frequency band in the corresponding carrier. Alternatively, a capability for the maximum bandwidth may vary for each UE. In consideration of this, the BS may instruct the UE to operate only in a partial bandwidth of the wide-band carrier instead of the entire bandwidth, and the corresponding partial bandwidth is referred to as a bandwidth part (BWP). In the frequency domain, the BWP is a subset of contiguous common resource blocks defined for a numerology $\mu_i$ within a bandwidth part i on a carrier, and a numerology (e.g., subcarrier spacing, CP length, slot/mini-slot duration) may be configured.

Meanwhile, the BS may configure one or more BWPs within one carrier configured for the UE. Alternatively, when UEs are concentrated on a specific BWP, some UEs may be moved to other BWPs for load balancing. Alternatively, a partial central spectrum of the entire bandwidth may be excluded and both BWPs of the cell may be configured in the same slot by considering frequency domain inter-cell interference cancellation between neighboring cells. That is, the BS may configure at least one DL/UL BWP to the UE associated with the wideband carrier, and activate at least one DL/UL BWP among the DL/UL BWP(s) (L1 signaling which is a physical layer control signal, MAC control element (CE) which is an MAC layer control signal, or RRC signaling) and indicate to switch at least one DL/UL BWP to another configured DL/UL BWP (by L1 signaling, MAC CE, or RRC signaling), or configure a timer value, and allow the UE to switch at least one DL/UL BWP to a predetermined DL/UL BWP when the timer expires. The activated DL/UL BWP is specifically referred to as an active DL/UL BWP. In a situation such as when the UE is in an initial access process or before an RRC connection of the UE is set up, the UE may not be able to receive a configuration for the DL/UL BWP. In such a situation, the DL/UL BWP assumed by the UE is referred to as an initial active DL/UL BWP.

### Physical Channel and General Signal Transmission

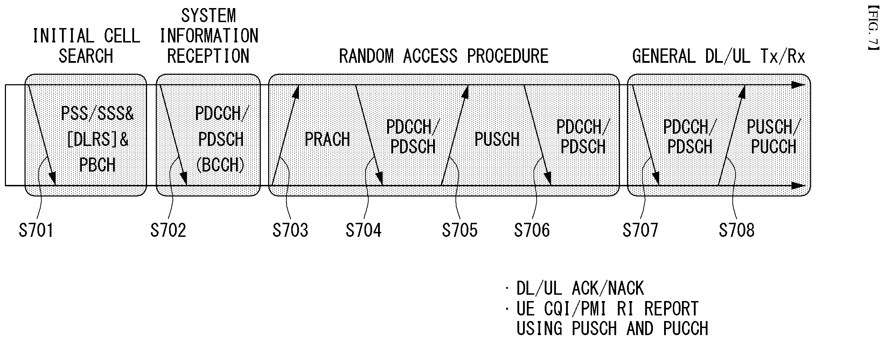

FIG. 7 illustrates physical channels and general signal transmission used in 3GPP systems. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S701). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. Meanwhile, the UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S702).

Meanwhile, when there is no radio resource first accessing the eNB or for signal transmission, the UE may perform a Random Access Procedure (RACH) to the eNB (S703 to S706). To this end, the UE may transmit a specific sequence to a preamble through a Physical Random Access Channel (PRACH) (S703 and S705) and receive a response message (Random Access Response (RAR) message) for the preamble through the PDCCH and a corresponding PDSCH. In the case of a contention based RACH, a Contention Resolution Procedure may be additionally performed (S706).

The UE that performs the above procedure may then perform PDCCH/PDSCH reception (S707) and Physical Uplink Shared Channel (PUSCH)/Physical Uplink Control Channel (PUCCH) transmission (S708) as a general uplink/downlink signal transmission procedure. In particular, the UE may receive Downlink Control Information (DCI) through the PDCCH. Here, the DCI may include control information such as resource allocation information for the UE and formats may be differently applied according to a use purpose.

Meanwhile, the control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

New Radio (NR) supports the RRC_INACTIVE state in addition to the RRC_IDLE state, and a UE transmitting infrequent (periodic and/or non-periodic) data may be generally instructed by the BS to stay in the RRC_INACTIVE state. Since data transmission in the RRC_INACTIVE state is not supported until Rel-16, the user equipment (UE) must particularly transition the RRC connection to a resume (i.e., the RRC_CONNECTED state) to transmit UL (or Mobile Originated) and/or DL (or Mobile Terminated) data.

Connection setup for the data transmission and a subsequent return process to the RRC_INACTIVE state are required regardless of the size of data to be transmitted, causing unnecessary power consumption and signaling overhead. This problem becomes particularly serious when the size of the data to be transmitted is small and the transmission frequency is low as follows.

(1) Smartphone applications:

- Traffic to Instant Messaging (IM) service
- Heart-beat/keep-alive traffic of IM/email clients and other apps
- Push notifications of various applications

(2) Non-smartphone applications:

- Traffic of wearables (e.g., periodic positioning information, etc.)
- Sensors (e.g., Industrial Wireless Sensor Networks that transmit temperature and pressure values periodically or by an event-triggered scheme)
- Smart meters and smart meter networks that transmit periodic meter readings

Excessive signaling overhead that occurs when the NR UE in the RRC_INACTIVE state transmits small data is a rather chronic problem, and as the number of NR UEs increases, the excessive signaling overhead becomes a more critical issue in terms of UE power consumption as well as network performance and efficiency.

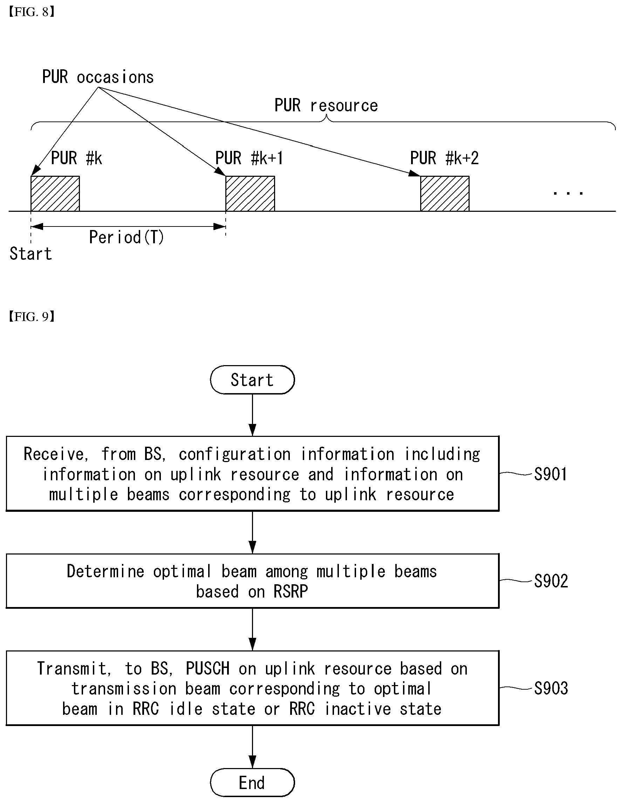

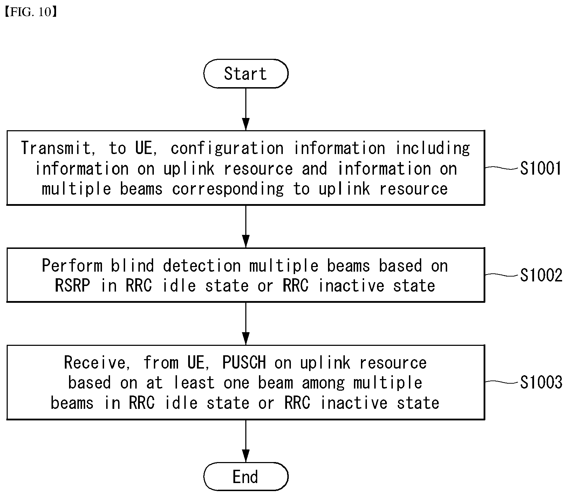

In order to solve this problem, a method in which the NR UE transmits uplink (UL) data through a preconfigured UL resource (PUR) in the RRC_INACTIVE state may be considered. In particular, when considering multi-beam operation support, which is a key differentiation point of NR compared to LTE, a UE supporting UL data transmission in the RRC_INACTIVE state through the PUR may perform PUR transmission in the following order. For example, the UE/BS described with reference to FIGS. 9 and 10 may perform at least one of the following operations (1) to (9).

(1) The UE requests a PUR configuration in the RRC_CONNECTED state and receives the PUR configuration through higher layer signaling.
(2) The UE switches from the RRC_CONNECTED state to the RRC_INACTIVE/RRC_IDLE state (i.e. go to sleep).
(3) Wake up (but still in the RRC_INACTIVE/RRC_IDLE state)
(4) Timing advance (TA)/beam validation (before PUR occasion)
(5) UL Tx beam selection (optional, before PUR occasion)
(6) UL transmission (and optional TA/beam update) (starting on PUR occasion)
(7) Go to sleep
(8) Repeat (3) to (7) for each of the PUR occasions
(9) As soon as the PUR transmission is completed, the PUR configuration is released through the RRC connection release procedure.

In the present disclosure, a method for supporting UL transmission by using PUR resources in the RRC_INACTIVE state in an NR system supporting multi-beams among the overall procedures for the PUR transmission in the RRC_INACTIVE state is proposed. That is, the present disclosure proposes a method of configuring information related to a UL transmission beam of a PUR transmitting UE. The present disclosure may include a PUR configuration (i.e., step (1)) of the overall procedure exemplified above, and operations of steps (5) and (6) related thereto.

In the present disclosure, the preconfigured UL resource may be mutually replaced with PUR, preconfigured PUSCH resource, configured grant, configured grant type 1, configured grant (CG), CG type 1, CG resource, and the like. And PUR transmission may mean an operation in which the UE (in the RRC_INACTIVE/RRC_IDLE state) performs UL (e.g., PUSCH) transmission using the PUR, and may include a series of downlink (DL) reception following UL transmission, and UL transmission, and/or may include DL reception accompanying the PUR transmission (PDCCH reception for indicating the availability of a subsequent PUR occasion) or monitoring operation and a subsequent operation accordingly.

In the present disclosure, the PUR occasion or PUR may be referred to as an uplink resource or a resource for a PUSCH or a resource based on a configured grant.

In the present disclosure, performing the PUR transmission may mean transmitting (uplink) channel/signal/data/information through uplink resources (i.e., PUR).

In the present disclosure, a PUR UE or a PUR supporting UE may mean a UE that supports UL transmission using the PUR (in the RRC_INACTIVE/RRC_IDLE state), or a PUR supporting UE and instructed and/or configured with the PUR transmission.

FIG. 8 illustrates a PUR transmission resource configuration.

As illustrated in FIG. 8, the PUR may be periodically configured through configuration parameters such as a starting point, a period, and a transmission interval. In this case, a time/frequency resource capable of periodically repeated PUR transmission is referred to as a PUR occasion in the present disclosure. The BS may configure the entire PUR transmission interval in time units (e.g., ms, sec, slot, frame, hyper-frame, etc.) or the number of PUR occasions. At this time, the setting value may include infinity, and when the setting value is configured to infinity, the UE may continue to perform the PUR transmission unless otherwise instructed by the BS.

In the present disclosure, the data transmission in the RRC_INACTIVE state may include data transmission in the RRC_IDLE state or may be replaced with the data transmission in the RRC_IDLE state.

In the present disclosure, the UL data transmission method in the RRC_INACTIVE state may include DL reception and/or UL transmission following UL data transmission.

Hereinafter, in the present disclosure, a method of configuring an uplink resource for NR multi-beam support (or a PUR configuration method) will be described. That is, hereinafter, in the present disclosure, a method of configuring information related to a UL transmission beam of a PUR transmitting UE will be described.

Specifically, in the present disclosure, a method (hereinafter, referred to as Method 1) of indicating a UL Tx beam for PUR transmission of the UE by the BS, a method (hereinafter, referred to as Method 2) of allowing the UE to select the UL Tx beam for the PUR transmission, a method (hereinafter, referred to as Method 3) of allowing the UE to select the UL Tx beam for the PUR transmission from among the UL Tx beams indicated by the BS, and a method (hereinafter, referred to as Method 4) of indicating the UL Tx beam only for some PURs by the BS will be described below.

Hereinafter, methods to be described are just classified for convenience and it is needless to say that the configuration of any one method may be substituted with the configuration of another method or may be applied in combination with each other.

A slot, a subframe, a frame, etc., mentioned in the embodiments described in the present disclosure may correspond to specific examples of predetermined time units used in the wireless communication system. That is, in applying the methods proposed in the present disclosure, the time unit or the like may be substituted with other time units applied in another wireless communication system, and applied.

The contents (3GPP system, feature structure, NR system, etc.) described above may be applied in combination with methods proposed in the present disclosure to be described below and/or may be supplemented to clarify technical features of the methods proposed in the present disclosure.

In the present disclosure, '()' may be interpreted as both excluding the contents in () and including the contents in parentheses. And/or in the present disclosure, '()' may mean a group/emphasis of the element (or content) in parentheses, or mean an abbreviation/full name of the term in front of parentheses, and/or may be English description of the contents in front of parentheses, of course.

In the present disclosure, '/' maybe interpreted as both a case of including the contents distinguished by '/' (and) and a case of including only some of the distinguished contents (or).

As exemplified in (1) above, the PUR supporting UE may request the PUR configuration to the BS in the RRC_CONNECTED state for the PUR transmission in an NR multi-beam situation. In response to this, the BS may configure or reconfigure PUR configuration information (e.g., a form including RRC IE, PUR-Config) requested by the PUR supporting UE through an RRC connection release procedure. In addition, the RRC connection release procedure may be used to release the PUR configuration including the PUR upon completion of the PUR transmission. To support an NR multi-beam operation, the PUR configuration may include beam-related information of the PUR. The beam-related information of the PUR for the multi-beam operation may be configured in the following methods (Method 1 to Method 4).

Method **1** - (Method in which the BS indicates the UL Tx beam for the PUR transmission of the UE)

The method is a method in which the BS indicates a UL transmission (Tx) beam to be used upon the PUR transmission by the PUR supporting UE through the PUR configuration. For example, a method of indicating the UL Tx beam by the BS may be a form of configuring or including spatial relation info in an RRC IE (e.g., PUR-Config IE) for the PUR configuration as follows.

The BS may indicate the beam used upon SRS transmission by the UE as the UL Tx beam in the form of "spatialRelationInfo" = SRS Resource Indicator (SRI).

And/or the BS may indicate one of the downlink (DL) receive (Rx) bam directions in the form of "spatialRelationInfo" = CSI-RS Resource Indicator (CRI), or "spatialRelationInfo" = SSB Resource Indicator (SSBRI).

In this case, the BS may instruct or recommend to the UE to use a UL Tx beam corresponding to or optimized for the indicated DL beam. When the BS indicates/recommends multiple beams, selection of the final UL beam may be determined by UE implementation.

For example, the BS configures multiple PURS, and configures the UL Tx beam differently for each PUR to configure the PUR for each beam in the NR multi-beam operation situation. The BS may configure UL Tx beams corresponding to different SSBs in the form of "spatialRelationInfo" = SSB Resource Indicator (SSBRI) for multiple PURs. And/or the UE may perform the PUR transmission through a PUR corresponding to the SSB index selected as the best SSB criterion from the RSRP point of view. At this time, the BS may receive the UL transmission of the corresponding UE and at the same time, additionally obtain UL Tx beam information used by the corresponding UE by receiving in the SSB beam direction configured for each PUR (s) of the UE to receive or by performing blind detection (BD).

As in the above example, when multiple PURs are configured for one UE, each PUR configuration (e.g., PUR-Config IE) may include a unique ID. As such, the unique ID for distinguishing PUR configurations may be used for prioritization between the PUR configurations. For example, when all or part of the time/frequency domain overlaps between periodically configured PURs, or when the UE cannot simultaneously transmit because different beam directions are indicated, the PUR resource is preferentially selected in order of PUR IDs (e.g., in ascending order of order) to perform the PUR transmission.

**Method 2** - (Method for allowing the UE to select the UL Tx beam for the PUR transmission)

The method is a method which allows the UE to select the UL Tx beam to be used for the PUR transmission by the PUR supporting UE without instruction by the BS.

Compared to Method 1 in which the BS indicates the UL Tx beam for each PUR in the NR multi-beam operation situation, the method is more efficient in terms of using time/frequency resources and has an advantage of having a small signaling overhead, but there may be a disadvantage in that when the PUR transmission should be received in a situation in which the BS may not know the UL Tx beam, a BS BD burden increases.

As an example of a method in which the BS instructs the UE to select the UL Tx beam, the BS may not configure or include spatial relation info in the PUR configuration or in the RRC IE (e.g., PUR-Config IE) for the PUR configuration. That is, when the spatial relation info is not configured or included in the PUR configuration for a specific PUR, the PUR UE may determine the UL Tx beam direction of the corresponding PUR.

For example, the BS may instruct the UE to select the UL Tx beam by not configuring the spatial relation info in the PUR configuration. For example, in this case, the UE may perform the PUR transmission by the UL Tx beam corresponding to the SSB index selected as the best SSB criterion from the RSRP point of view. In this case, the BS may receive the UL transmission and at the same time, additionally obtain UL Tx beam information by performing the blind detection (BD) on all SSB transmission beam directions for the PUR for which the spatial relation info is not configured.

**Method 3** - (Method for allowing the UE to select the UL Tx beam for the PUR transmission among the UL Tx beams indicated by the BS)

The method is a method which allows the PUR supporting UE to select the UL Tx beam to be used for the PUR transmission among the UL Tx beams indicated by the BS.

Method 3 has an advantage of being more efficient in terms of time/frequency resource use and smaller signaling overhead than Method 1 in the NR multi-beam operation situation, and may have an advantage of reducing the BS BD burden compared to Method 2. For example, in order for the BS to indicate UL Tx beams selectable by the UE, the BS may indicate a (candidate) UL Tx beam list or UL Tx beam pool by configuring multiple spatial relation info in the PUR configuration.

The BS may provide the UE with a (candidate) UL Tx beam list or a pool of UL Tx beams that the UE may select or may be allowed to select by configuring multiple spatial relation info in the PUR configuration corresponding to one PUR. And/or when multiple spatial relation info is configured in one PUR configuration, the UE may perform the PUR transmission by selecting one of UL Tx beams indicated by one of the configured spatial relation info. As an example, when the method for selecting the UL Tx beam for the PUR transmission by the UE in the (candidate) UL Tx beam list or pool is configured in the form of "spatialRelationInfo" = SSBRI, the method may be selecting the UL Tx beam corresponding to the best SSB selected by the UE based on the RSRP.

For example, in a multi-beam operation situation in which N SSB beam directions exist, the BS may configure UL TX beams corresponding to SSB#1, SSB#2, ..., SSB#M, respectively in the form of "spatialRelationInfo" = SSBRI(SSB Resource Indicator) 1, SSBRI 2, ..., SSBRI M(<N) in the PUR configuration. And / or the UE may select the best SSB among SSB #1, SSB #2, ..., SSB #M based on SSB RSRP and select the UL Tx beam corresponding thereto, and perform the PUR transmission with a resource indicated by the PUR configuration. At this time, the base station performs the blind detection (BD) on the SSB beam directions (i.e., SSB #1, SSB #2, ..., SSB #4) included in the PUR configuration of the UE to receive the UL transmission and at the same time, additionally, obtain information on the UL Tx beam selected by the UE in the UL Tx beam list or UL Tx beam pool.

**Method 4** - (Method in which the BS indicates the UL Tx beam only for some PURs)

The method is a method in which the BS configures multiple PURs and indicates the UL Tx beam or UL Tx beam list (or pool) only for some of the multiple PURs. That is, Method 4 may be a method in which the BS selectively configures and applies Methods 1/2/3 for each PUR or for each PUR configuration.

The BS configures one spatial relation info for a specific PUR or PUR configuration to indicate the UL Tx beam (i.e., Method 1), or does not configure the spatial relation info so that the UE selects the UL Tx beam (i.e., Method 2), or configures multiple spatial relation info so that the UE selects a value from configured values (i.e., Method 3). The UE refers to whether the spatial relation info is configure for each PUR or PUR configuration, or the value and number when the spatial relation info is configured, and uses the configured UL Tx beam when one is configured (i.e., Method 1) or the UE selects the UL Tx beam when the spatial relation info is not configured (i.e., Method 2), or selects the UL Tx beam among the configured values when multiple spatial relation info is configured (Method 3) to transmit the PUR.

For example, in the multi-beam operation situation in which N SSB beam directions exist, the BS may configure the PUR for each M beams in M (< N) SSB beam directions, and additionally configure a PUR(s) in which L (<= N - M ) (e.g., L = 1) spatial relation info is not configured. For example, in this case, the UE may determine the best SSB based on the RSRP among all N SSBs, select a PUR for which the spatial relation info is configured in the corresponding UL Tx beam direction, and perform the PUR transmission. If there is no PUR in which the spatial relation info is configured in the UL Tx beam direction corresponding to the best SSB selected by the UE, the UE may select one of PUR(s) for which L spatial relation info is not configured, and perform the PUR transmission in the UL Tx beam direction corresponding to the best SSB selected by the UE. At this time, if L > 1, the method for the UE to select one of L PUR(s) for which the spatial relation info is not configured may be either arbitrarily determined by the UE, or determined by a PUR configuration ID (e.g., first selected in ascending order of ID) or by a configured order (e.g., first-configured PUR is preferentially selected).

When there are multiple PURs in which the spatial relation info configured in the above example matches the best SSB beam direction determined by the UE, which resource is to be used may be either arbitrarily determined by the UE, or determined by the PUR configuration ID (e.g., first selected in ascending order of ID) or by the configured order (e.g., first-configured PUR is preferentially selected).

As in the above example, when the PUR in which the spatial relation info is configured and the PUR in which the spatial relation info is not configured coexist, the UE may first select the PUR in which the spatial relation info is configured. That is, the UE may restrict to (1) preferentially select the UL Tx beam and PUR corresponding to the best SSB based on the SSB RSRP for M SSBs in which the spatial relation info is configured, and (2) select a UL TX beam and PUR corresponding to the best SSB beam among all N SSBs or select one of L PURs in which the spatial relation info is not configured only when even any SSB among M SSBs does not satisfy a specific RSRP threshold the threshold, i.e., only when all qualities of M SSBs are equal to or less than a specific value.

In the case of (2), the UE may have an effect of informing the BS that the quality of the PUR UL Tx beam(s) configured by the BS is equal to or less than a specific threshold. The BS may use a procedure of updating an event of receiving the PUR, an event of receiving the PUR (continuously) X times, or the UL TX beam configuration for the UE with the PURs (one of PURs) in which the spatial relation info is not configured for the trigger purpose.

In the above example, L PUR(s) in which the spatial relation info is not configured may be used for the purpose of fallback to enable the PUR transmission even when (all) the beam quality of the UL Tx beam direction(s) configured by the BS is equal to or less than a specific threshold. In this case, there may be advantageous in terms of latency, resource efficiency, etc., against fallback through the RACH procedure.

FIG. 9 is a flowchart for describing an operation method of a UE proposed in the present disclosure.

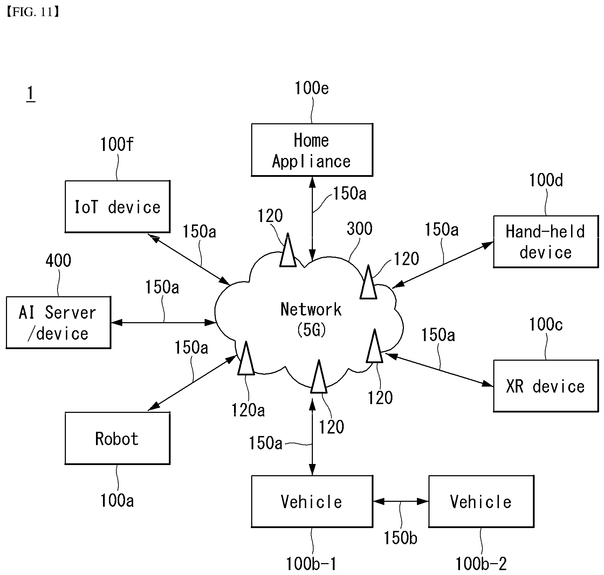

Referring to FIG. 9, first, in step S901, the UE (reference numeral 100/200 in FIGS. 11 to 14) may receive, from the BS, configuration information including information on an uplink resource and information on multiple beams corresponding to the uplink resource. For example, the uplink resource may be a resource configured based on a configured grant and/or a resource configured for transmission of small data. And/or the uplink resource may be a resource for transmission of the small data based on the configured grant.

And/or the information on the multiple beams includes one or more synchronization signal block (SSB) indexes (or ids/indicators) and/or one or more channel state information-reference signal (CSI-RS) resource indexes (or ids/indicators). For example, the information on the multiple beams may include a sequence/bitmap/list/pool constituted by at least one SSB index and/or at least one CSI-RS resource index.

And/or the information on the multiple beams may include one or more synchronous sounding reference signal (SRS) resource indexes (or ids/indicators). For example, the information on the multiple beams may include a sequence/bitmap/list/pool constituted by at least one SRS resource index.

And/or the information on the multiple beams may include at least one of one or more SSB indexes, one or more CSI-RS resource indexes, and/or one or more SRS resource indexes. For example, the information on the multiple beams may include a sequence/bitmap/list/pool constituted by one or more of at least one SSB, at least one CSI-RS resource index, and/or at least one SRS resource index.

And/or the configuration information may be received in the RRC connected state.

And/or the UE may transmit a request for the configuration information to the BS in the RRC connected state.

And/or, the UE may receive, from the BS, multiple SSBs and/or multiple CSI-RS resources (or CSI-RSs) for determining an optimal beam.

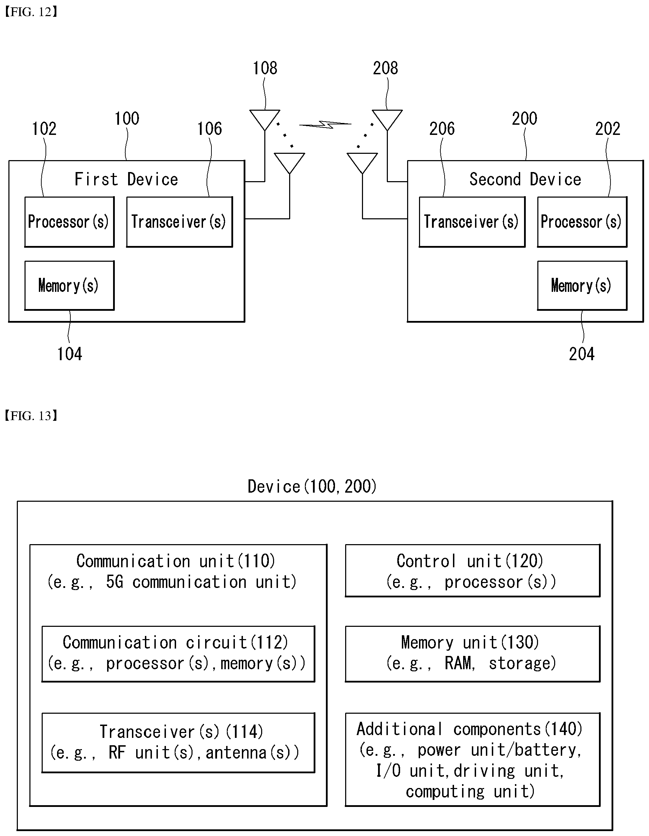

For example, the operation of receiving the configuration information in step S901 by the UE in step S901 may be implemented by the apparatuses in FIGS. 11 to 14. For example, referring to FIG. 12, one or more processors 102/202 may control one or more memories 104/204 and/or one or more transceivers 106/206 so as to receive the configuration information.

And/or the UE (reference numeral 100/200 in FIGS. 11 to 14) may determine the optimal beam among the multiple beams based on reference signal received power (RSRP) in step S902. And/or the UE may determine the optimal beam among multiple beams based on a predefined scheme. For example, step S902 may be performed in the RRC idle state or RRC inactive state.

For example, the operation of determining the optimal beam by the UE in step S901 may be implemented by the apparatuses in FIGS. 11 to 14. For example, referring to FIG. 12, one or more processors 102/202 may control one or more memories 104/204 and/or one or more transceivers 106/206 so as to determine the optimal beam.

And/or in step S903, the UE (reference numeral 100/200 in FIGS. 11 to 14) may transmit, to the BS, PUSCH (or data/small data/information) in a transmission corresponding to the optimal beam and/or the optimal beam in a radio resource control (RRC) idle state or an RRC inactive state.

For example, when the optimal beam is a downlink (DL) (reception) beam (e.g., SSB/CSI-RS/CSI-RS resource), the UE may transmit the PUSCH in the uplink resource by using the transmission beam corresponding to the optimal beam. For example, the transmission beam corresponding to the optimal beam may mean a UL (transmission) beam in the same direction as the optimal beam, and/or a UL (transmission) beam corresponding to the (preconfigured/defined) best beam.

For example, when the optimal beam is an uplink (UL) (transmission) beam (e.g., SRS/SRS resource), the UE may transmit the PUSCH in the uplink resource by using the optimal beam.

Although the operation of determining the optimal beam for the PUSCH and/or transmitting the PUSCH is exemplified as the UE operation, but the PUSCH may be replaced with other uplink signals/channels/data/PUSCHs and combinations thereof. For example, in the UE operation, the PUSCH may be replaced with a physical uplink control channel (PUCCH). In the UE operation, the PUSCH may be replaced with 'PUCCH and/or PUSCH'.

For example, the operation of transmitting the PUSCH by the UE in step S903 may be implemented by the apparatuses in FIGS. 11 to 14. For example, referring to FIG. 12, one or more processors 102/202 may control one or more memories 104/204 and/or one or more transceivers 106/206 so as to transmit the PUSCH.

Although the operation of the UE has been described based on method 3, the UE may operate based on Method 1, Method 2, Method 4, or combinations thereof.

The operation of the UE described by referring to FIG. 9 is the same as the operations (e.g., Method 1 to Method 4) of the UE described by referring to FIGS. 1 to 8, so other detailed descriptions will be omitted.

The signaling and operation may be implemented by the devices (e.g., FIGS. 11 to 14) to be described below. For example, the signaling and operation may be processed by one or more processors of FIGS. 11 to 14 and the signaling and operation may be stored in memories in the form of an instruction/program (e.g., instruction or executable code) for driving at least one processor of FIGS. 11 to 14.

For example, a processing apparatus configured to control a UE to transmit a physical uplink shared channel (PUSCH) in a wireless communication system may include: at least one processor; and at least one memory operatively connected to the at least one processor, and storing instructions of performing operations based on being executed based on the at least one processor, in which the operations may include receiving, from a base station (BS), configuration information including information on an uplink resource and information on multiple beams corresponding to the uplink resource, determining an optimal beam among the multiple beams based on a reference signal received power (RSRP), and transmitting, to the BS, the PUSCH on the uplink resource based on a transmission beam corresponding to the optimal beam in a radio resource control (RRC) idle state or RRC inactive state.

As another example, in a computer-readable storage medium storing at least one instruction of allowing, based on being executed based on at least one processor, the at least one processor to control operations, the operation may include: receiving, from a base station (BS), configuration information including information on an uplink resource and information on multiple beams corresponding to the uplink resource; determining an optimal beam among the multiple beams based on a reference signal received power (RSRP), and transmitting, to the BS, a physical uplink shared channel (PUSCH) on the uplink resource based on a transmission beam corresponding to the optimal beam in a radio resource control (RRC) idle state or RRC inactive state.

FIG. 10 is a flowchart for describing an operation method of a base station (BS) proposed by the present disclosure.

Referring to FIG. 10, first, in step S 1001, the BS (reference numeral 100/200 in FIGS. 11 to 14) may receive, to the UE, configuration information including information on an uplink resource and information on multiple beams corresponding to the uplink resource. For example, the uplink resource may be a resource configured based on a configured grant and/or a resource configured for transmission of small data. And/or the uplink resource may be a resource for transmission of the small data based on the configured grant.

And/or the information on the multiple beams includes one or more synchronization signal block (SSB) indexes (or ids/indicators) and/or one or more channel state information-reference signal (CSI-RS) resource indexes (or ids/indicators). For example, the information on the multiple beams may include a sequence/bitmap/list/pool constituted by at least one SSB index and/or at least one CSI-RS resource index.

And/or the information on the multiple beams may include one or more synchronous sounding reference signal (SRS) resource indexes (or ids/indicators). For example, the information on the multiple beams may include a sequence/bitmap/list/pool constituted by at least one SRS resource index.

And/or the information on the multiple beams may include at least one of one or more SSB indexes, one or more CSI-RS resource indexes, and/or one or more SRS resource indexes. For example, the information on the multiple beams may include a sequence/bitmap/list/pool constituted by one or more of at least one SSB, at least one CSI-RS resource index, and/or at least one SRS resource index.

And/or the configuration information may be transmitted in the RRC connected state.

And/or the BS may receive a request for the configuration information to the BS in the RRC connected state.

And/or, the BS may transmit, toe the UE, multiple SSBs and/or multiple CSI-RS resources (or CSI-RSs) for determining an optimal beam.

For example, an operation of transmitting the configuration information by the BS in step S1001 may be implemented by the apparatuses in FIGS. 11 to 14 described above. For example, referring to FIG. 12, one or more processors 102/202 may control one or more memories 104/204 and/or one or more transceivers 106/206 so as to transmit the configuration information.

And/or in step S1002, the BS (reference numeral 100/200 in FIGS. 11 to 14) may perform blind detection based on multiple beams in a radio resource control (RRC) idle state or an RRC inactive state. For example, the blind detection operation in step S1002 may be performed simultaneously with the PUSCH reception operation in step S1003. For example, the BS may receive the PUSCH based on a specific beam by switching multiple beams.

For example, the operation of performing the blind detection by the BS in step S1002 may be implemented by the apparatuses in FIGS. 11 to 14 described above. For example, referring to FIG. 12, one or more processors 102/202 may control one or more memories 104/204 and/or one or more transceivers 106/206 so as to perform the blind detection.

And/or in step S1003, the BS (reference numeral 100/200 in FIGS. 11 to 14) may receive, from the UE, the PUSCH in the uplink resource based on at least one beam among multiple beams in the RRC idle state or RRC inactive state.

Although the operation of performing the blind detection and/or receiving the PUSCH is exemplified as the BS operation, but the PUSCH may be replaced with other uplink signals/channels/data/PUSCHs and combinations thereof. For example, in the BS operation, the PUSCH may be replaced with a physical uplink control channel (PUCCH). In the UE operation, the PUSCH may be replaced with 'PUCCH and/or PUSCH'.

For example, the operation of receiving the PUSCH by the BS in step S1003 may be implemented by the apparatuses in FIGS. 11 to 14 described above. For example, referring to FIG. 12, one or more processors 102/202 may control one or more memories 104/204 and/or one or more transceivers 106/206 so as to receive the PUSCH.

Although the operation of the BS has been described based on method 3, the BS may operate based on Method 1, Method 2, Method 4, or combinations thereof.

The operation of the BS described by referring to FIG. 10 is the same as the operations (e.g., Method 1 to Method 4) of the BS described by referring to FIGS. 1 to 9, so other detailed descriptions will be omitted.

The signaling and operation may be implemented by the devices (e.g., FIGS. 11 to 14) to be described below. For example, the signaling and operation may be processed by one or more processors of FIGS. 11 to 14 and the signaling and operation may be stored in memories in the form of an instruction/program (e.g., instruction or executable code) for driving at least one processor of FIGS. 11 to 14.

For example, a processing apparatus configured to control a BS to receive a physical uplink shared channel (PUSCH) in a wireless communication system may include: at least one processor; and at least one memory operatively connected to the at least one processor, and storing instructions of performing operations based on being executed based on the at least one processor, in which the operations may include transmitting, to a UE, configuration information including information on an uplink resource and information on multiple beams corresponding to the uplink resource, performing blind detection based on the multiple beams in a radio resource control (RRC) idle state or RRC inactive state, and receiving, from the UE, the PUSCH in the uplink resource based on at least one beam among the multiple beams in the RRC idle state or RRC inactive state.

As another example, in a computer-readable storage medium storing at least one instruction of allowing, based on being executed based on at least one processor, the at least one processor to control operations, the operation may include: transmitting, to a UE, configuration information including information on an uplink resource and information on multiple beams corresponding to the uplink resource; performing blind detection based on the multiple beams in a radio resource control (RRC) idle state or RRC inactive state; and receiving, from the UE, the PUSCH in the uplink resource based on at least one beam among the multiple beams in the RRC idle state or RRC inactive state.

## Communication system applied to the disclosure

The various descriptions, functions, procedures, proposals, methods, and/or operational flowcharts of the disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 11 illustrates a communication system (1) applied to the disclosure.

Referring to FIG. 11, a communication system applied to the disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. Relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the disclosure.

## Devices applicable to the disclosure

FIG. 12 illustrates wireless devices applicable to the disclosure.

Referring to FIG. 12, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 11.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the disclosure, the wireless device may represent a communication modem/circuit/chip.

The second wireless device 200 may include at least one processor 202 and at least one memory 204 and additionally further include at least one transceiver 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 206 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. From RF band signals into baseband signals in order to process received user data, control information, radio signals/channels, etc. Using the one or more processors 102 and 202. The one or more transceivers 106 and 206 may convert the user data, control information, radio signals/channels, etc. Processed using the one or more processors 102 and 202 from the base band signals into the RF band signals. To this end, the one or more transceivers 106 and 206 may include (analog) oscillators and/or filters.

## Example of a wireless device applied to the disclosure

FIG. 13 illustrates another example of a wireless device applied to the disclosure. The wireless device may be implemented in various forms according to a use-case/service.

Referring to FIG. 13, wireless devices 100 and 200 may correspond to the wireless devices 100 and 200 of FIG. 12 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 104 of FIG. 12. For example, the transceiver(s) 114 may include the one or more transceivers 106 and 106 and/or the one or more antennas 108 and 108 of FIG. 12. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110).

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 11), the vehicles (100b-1 and 100b-2 of FIG. 11), the XR device (100c of FIG. 11), the hand-held device (100d of FIG. 11), the home appliance (100e of FIG. 11), the IoT device (100f of FIG. 11), a digital broadcast terminal, a hologram device, a public safety device, an MTC device, a medicine device, a fintech device (or a finance device), a security device, a climate/environment device, the AI server/device (400 of FIG. 11), the BSs (200 of FIG. 11), a network node, etc. The wireless device may be used in a mobile or fixed place according to a use-example/service.

In FIG. 13, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

**Portable Device Example to Which Disclosure is Applied**

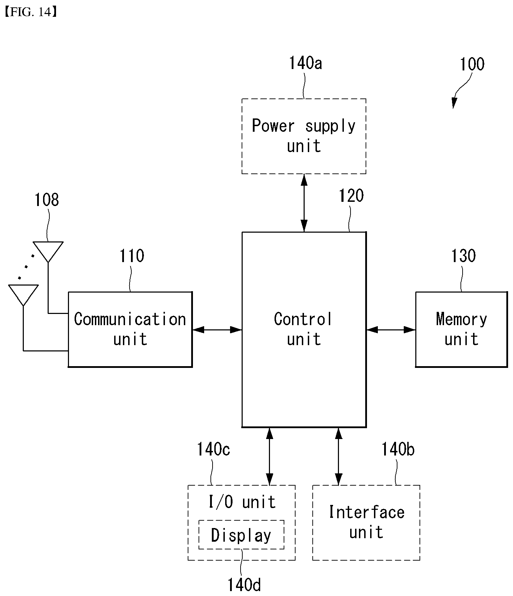

FIG. 14 illustrates a portable device applied to the disclosure. The portable device may include a smart phone, a smart pad, a wearable device (e.g., a smart watch, a smart glass), and a portable computer (e.g., a notebook, etc.). The portable device may be referred to as a Mobile Station (MS), a user terminal (UT), a Mobile Subscriber Station (MSS), a Subscriber Station (SS), an Advanced Mobile Station (AMS), or a Wireless terminal (WT).

Referring to FIG. 14, a portable device 100 may include an antenna unit 108, a communication unit 110, a control unit 120, a memory unit 130, a power supply unit 140a, an interface unit 140b, and an input/output unit 140c. The antenna unit 108 may be configured as a part of the communication unit 110. The blocks 110 to 130/140a to 140c correspond to the blocks 110 to 130/140 of FIG. 13, respectively.

The communication unit 110 may transmit/receive a signal (e.g., data, a control signal, etc.) to/from another wireless device and eNBs. The control unit 120 may perform various operations by controlling components of the portable device 100. The control unit 120 may include an Application Processor (AP). The memory unit 130 may store data/parameters/programs/codes/instructions required for driving the portable device 100. Further, the memory unit 130 may store input/output data/information, etc. The power supply unit 140a may supply power to the portable device 1010 and include a wired/wireless charging circuit, a battery, and the like. The interface unit 140b may support a connection between the portable device 100 and another external device. The interface unit 140b may include various ports (e.g., an audio input/output port, a video input/output port) for the connection with the external device. The input/output unit 140c may receive or output a video information/signal, an audio information/signal, data, and/or information input from a user. The input/output unit 140c may include a camera, a microphone, a user input unit, a display unit 140d, a speaker, and/or a haptic module.

As one example, in the case of data communication, the input/output unit 140c may acquire information/signal (e.g., touch, text, voice, image, and video) input from the user and the acquired information/signal may be stored in the memory unit 130. The communication unit 110 may transform the information/signal stored in the memory into the radio signal and directly transmit the radio signal to another wireless device or transmit the radio signal to the eNB. Further, the communication unit 110 may receive the radio signal from another wireless device or eNB and then reconstruct the received radio signal into original information/signal. The reconstructed information/signal may be stored in the memory unit 130 and then output in various forms (e.g., text, voice, image, video, haptic) through the input/output unit 140c.

In this case, a wireless communication technology implemented in the wireless device 100, 200 of the present disclosure may include Narrowband Internet of Things for low energy communication in addition to LTE, NR and 6G. In this case, for example, the NB-IoT technology may be an example of a Low Power Wide Area Network (LPWAN) technology, and may be implemented by standards, such as LTE Cat NB1 and/or LTE Cat NB2, and the present disclosure is not limited to the aforementioned names. Additionally or alternatively, a wireless communication technology implemented in a wireless device (100, 200) of the present disclosure may perform communication based on the LTE-M technology. In this case, for example, the LTE-M technology may be an example of the LPWAN technology and may be called various names, such as enhanced Machine Type Communication (eMTC). For example, the LTE-M technology may be implemented by at least any one of various standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and the present disclosure is not limited to the aforementioned names. Additionally or alternatively, a wireless communication technology implemented in a wireless device (100, 200) of the present disclosure may include at least any one of ZigBee, Bluetooth and a Low Power Wide Area Network (LPWAN) in which low energy communication is considered, and the present disclosure is not limited to the aforementioned names. For example, the ZigBee technology may generate a personal area networks (PAN) related to small/low-power digital communication based on various standards, such as IEEE 802.15.4, and may be called various names.

The embodiments described above are implemented by combinations of components and features of the disclosure in predetermined forms. Each component or feature should be considered selectively unless specified separately. Each component or feature may be carried out without being combined with another component or feature. Moreover, some components and/or features are combined with each other and may implement embodiments of the disclosure. The order of operations described in embodiments of the disclosure may be changed. Some components or features of one embodiment may be included in another embodiment, or may be replaced by corresponding components or features of another embodiment. It is apparent that some claims referring to specific claims may be combined with another claims referring to the claims other than the specific claims to constitute the embodiment or add new claims by means of amendment after the application is filed.

Embodiments of the disclosure may be implemented by various means, for example, hardware, firmware, software, or combinations thereof. When embodiments are implemented by hardware, one embodiment of the disclosure may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

When embodiments are implemented by firmware or software, one embodiment of the disclosure may be implemented by modules, procedures, functions, etc. Performing functions or operations described above. Software code may be stored in a memory and may be driven by a processor. The memory is provided inside or outside the processor and may exchange data with the processor by various well-known means.

It is apparent to those skilled in the art that the disclosure may be embodied in other specific forms without departing from essential features of the disclosure. Accordingly, the aforementioned detailed description should not be construed as limiting in all aspects and should be considered as illustrative. The scope of the disclosure should be determined by rational construing of the appended claims, and all modifications within an equivalent scope of the disclosure are included in the scope of the disclosure.

[Industrial Availability]

Although the method of transmitting and receiving PUSCH in the wireless communication system of the present disclosure has been described in connection with examples in which it applies to 3GPP LTE/LTE-A system and 5G systems (new RAT systems), the method is also applicable to other various wireless communication systems such as Beyond 5G, 6G, and Beyond 6G.

**Claims**

1. A method of transmitting a physical uplink shared channel (PUSCH) in a wireless communication system, which is performed by a user equipment (UE), the method comprising:

   receiving, from a base station (BS), configuration information including information on an uplink resource and information on multiple beams corresponding to the uplink resource;
   determining an optimal beam among the multiple beams based on a reference signal received power (RSRP); and
   transmitting, to the BS, the PUSCH on the uplink resource based on a transmission beam corresponding to the optimal beam in a radio resource control (RRC) idle state or RRC inactive state.

2. The method of claim 1, wherein the information on the multiple beams includes one or more synchronization signal block (SSB) indexes or one or more channel state information-reference signal (CSI-RS) resource indexes.

3. The method of claim 1, further comprising:
   receiving, from the BS, multiple synchronization signal blocks (SSBs) for determining the optimal beam.

4. The method of claim 1, further comprising:
   transmitting, to the BS, a request for the configuration information in an RRC connected state.

5. The method of claim 1, wherein the configuration information is received in the RRC connected state.

6. A UE configured to transmit a physical uplink shared channel (PUSCH) in a wireless communication system, the UE comprising:

   at least one transceiver;
   at least one processor; and
   at least one memory operatively connected to the at least one processor, and storing instructions of performing operations based on being executed based on the at least one processor,
   wherein the operations include
   receiving, from a base station (BS), configuration information including information on an uplink resource and information on multiple beams corresponding to the uplink resource,

determining an optimal beam among the multiple beams based on a reference signal received power (RSRP), and

transmitting, to the BS, the PUSCH on the uplink resource based on a transmission beam corresponding to the optimal beam in an RRC idle state or RRC inactive state.

7. The UE of claim 6, wherein the information on the multiple beams includes one or more synchronization signal block (SSB) indexes or one or more channel state information-reference signal (CSI-RS) resource indexes.

8. The UE of claim 6, wherein the operations further include receiving, from the BS, multiple synchronization signal blocks (SSBs) for determining the optimal beam.

9. The UE of claim 6, wherein the configuration information is received in the RRC connected state.

10. A method of receiving a physical uplink shared channel (PUSCH) in a wireless communication system, which is performed by a BS, the method comprising:

transmitting, to a UE, configuration information including information on an uplink resource and information on multiple beams corresponding to the uplink resource;

performing blind detection based on the multiple beams in a radio resource control (RRC) idle state or an RRC inactive state; and

receiving, from the UE, the PUSCH in the uplink resource based on at least one beam among the multiple beams in the RRC idle state or the RRC inactive state.

11. The method of claim 10, wherein the information on the multiple beams includes one or more synchronization signal block (SSB) indexes or one or more channel state information-reference signal (CSI-RS) resource indexes.

12. The method of claim 10, further comprising:
transmitting, to the UE, multiple synchronization signal blocks (SSBs) for determining the optimal beam.

13. The method of claim 10, further comprising:
receiving, from the UE, a request for the configuration information in an RRC connected state.

14. The method of claim 10, wherein the configuration information is transmitted in the RRC connected state.

15. A BS configured to receive a physical uplink shared channel (PUSCH) in a wireless communication system, the BS comprising:

at least one transceiver;

at least one processor; and

at least one memory operatively connected to the at least one processor, and storing instructions of performing operations based on being executed based on the at least one processor,

wherein the operations include

transmitting, to a UE, configuration information including information on an uplink resource and information on multiple beams corresponding to the uplink resource,

performing blind detection based on the multiple beams in a radio resource control (RRC) idle state or an RRC inactive state, and

receiving, from the UE, the PUSCH in the uplink resource based on at least one beam among the multiple beams in the RRC idle state or the RRC inactive state.

16. The BS of claim 15, wherein the information on the multiple beams includes one or more synchronization signal block (SSB) indexes or one or more channel state information-reference signal (CSI-RS) resource indexes.

17. The BS of claim 15, wherein the operations further include transmitting, to the UE, multiple synchronization signal blocks (SSBs) for determining the optimal beam.

18. The BS of claim 15, wherein the configuration information is transmitted in the RRC connected state.

19. A processing apparatus configured to control a UE to transmit a physical uplink shared channel (PUSCH) in a wireless communication system, the processing apparatus comprising:

at least one processor; and
at least one memory operatively connected to the at least one processor, and storing instructions of performing operations based on being executed based on the at least one processor,
wherein the operations include
receiving, from a base station (BS), configuration information including information on an uplink resource and information on multiple beams corresponding to the uplink resource,
determining an optimal beam among the multiple beams based on a reference signal received power (RSRP), and
transmitting, to the BS, the PUSCH on the uplink resource based on a transmission beam corresponding to the optimal beam in a radio resource control (RRC) idle state or RRC inactive state.

20. A computer-readable storage medium storing at least one instruction of allowing, based on being executed based on at least one processor, the at least one processor to control operations, wherein the operations include:

receiving, from a base station (BS), configuration information including information on an uplink resource and information on multiple beams corresponding to the uplink resource;
determining an optimal beam among the multiple beams based on a reference signal received power (RSRP), and
transmitting, to the BS, a physical uplink shared channel (PUSCH) on the uplink resource based on a transmission beam corresponding to the optimal beam in a radio resource control (RRC) idle state or RRC inactive state.

【FIG. 1】

【FIG. 2】

[FIG. 3]

Radio Frame 10ms

Fixed Size

Subframe 1ms

| 0 | 1 | 2 | 3 | 4 | 5 | 6 | 7 | 8 | 9 |

Subframe ={1, 2, 4} Slots

Slot

| 0 | 1 | 2 | 3 |

Slot={7, 14} Symbols

Size depends on subcarrier spacing

Symbol

| 0 | 1 | 2 | 3 | 4 | 5 | 6 | 7 | 8 | 9 | 10 | 11 | 12 | 13 |

Mini-Slot
(URLLC)

Mini-Slot={2, 4, 7} Symbols - ffs

【FIG. 4】

one subframe

$14 \cdot 2^{\mu}$ OFDM symbol

$k = N_{RB}^{\mu} N_{SC}^{RB} - 1$

resource block

resource element
-in case of a resource grid, $(k, \bar{l})$
-in case of a resource block, $(k, l)$

$N_{RB}^{\mu} N_{SC}^{RB} - 1$ subcarrier

$N_{SC}^{RB}$ subcarrier

$k = 0$

$l = 0$

$l = 14 \cdot 2^{\mu} - 1$

【FIG. 5】

【FIG. 6】

Antenna port A  
Antenna port B } Numerology X

Antenna port A  
Antenna port B } Numerology Y

[FIG. 7]

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S701    S702    S703    S704    S705    S706    S707    S708

· DL/UL ACK/NACK
· UE CQI/PMI RI REPORT
  USING PUSCH AND PUCCH

【FIG. 8】

PUR occasions

PUR resource

PUR #k          PUR #k+1          PUR #k+2

Period(T)

Start

...

【FIG. 9】

```
Start
  │
  ▼
Receive, from BS, configuration information including
information on uplink resource and information on          ─S901
multiple beams corresponding to uplink resource
  │
  ▼
Determine optimal beam among multiple beams               ─S902
based on RSRP
  │
  ▼
Transmit, to BS, PUSCH on uplink resource based on
transmission beam corresponding to optimal                 ─S903
beam in RRC idle state or RRC inactive state
  │
  ▼
End
```

【FIG. 10】

```
                    ( Start )
                        |
                        v
+-----------------------------------------------+
| Transmit, to UE, configuration information    |
| including information on uplink resource and  |----S1001
| information on multiple beams corresponding   |
| to uplink resource                            |
+-----------------------------------------------+
                        |
                        v
+-----------------------------------------------+
| Perform blind detection multiple beams based  |
| on RSRP in RRC idle state or RRC inactive     |----S1002
| state                                         |
+-----------------------------------------------+
                        |
                        v
+-----------------------------------------------+
| Receive, from UE, PUSCH on uplink resource    |
| based on at least one beam among multiple     |----S1003
| beams in RRC idle state or RRC inactive state |
+-----------------------------------------------+
                        |
                        v
                    ( End )
```

【FIG. 11】

【FIG. 12】

【FIG. 13】

Device(100, 200)

| Communication unit(110)<br>(e.g., 5G communication unit) | Control unit(120)<br>(e.g., processor(s)) |
|---|---|
| Communication circuit(112)<br>(e.g., processor(s),memory(s)) | Memory unit(130)<br>(e.g., RAM, storage) |
| Transceiver(s)(114)<br>(e.g., RF unit(s),antenna(s)) | Additional components(140)<br>(e.g., power unit/battery,<br>I/O unit,driving unit,<br>computing unit) |

【FIG. 14】

## INTERNATIONAL SEARCH REPORT

| International application No. |
|---|
| **PCT/KR2022/000631** |

**A. CLASSIFICATION OF SUBJECT MATTER**

**H04W 72/12**(2009.01)i; **H04W 72/14**(2009.01)i; **H04W 72/04**(2009.01)i; **H04B 7/06**(2006.01)i; **H04B 7/0408**(2017.01)i; **H04B 7/0404**(2017.01)i; **H04W 76/27**(2018.01)i

According to International Patent Classification (IPC) or to both national classification and IPC

**B. FIELDS SEARCHED**

Minimum documentation searched (classification system followed by classification symbols)

H04W 72/12(2009.01); H04B 7/0417(2017.01); H04B 7/06(2006.01); H04W 16/28(2009.01); H04W 72/04(2009.01); H04W 74/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUSCH, 상향링크 자원(uplink resource), 참조 신호 수신 전력(reference signal received power), 무선 자원 제어(radio resource control), 아이들(idle), 최적의 빔(ideal beam), 동기 신호 블록(synchronization signal block)

**C. DOCUMENTS CONSIDERED TO BE RELEVANT**

| Category* | Citation of document, with indication, where appropriate, of the relevant passages | Relevant to claim No. |
|---|---|---|
| X | WO 2018-084331 A1 (LG ELECTRONICS INC.) 11 May 2018. See paragraphs [0072]-[0093]; claims 1 and 3; and figure 2. | 1,6,10,15,19-20 |
| Y | | 2-5,7-9,11-14,16-18 |
| Y | US 2020-0314664 A1 (ZHOU, Hua et al.) 01 October 2020 (2020-10-01) See paragraphs [0252]-[0395]; and claim 1. | 2-5,7-9,11-14,16-18 |
| A | 3GPP; TSG RAN; NR; RRC protocol specification (Release 16). 3GPP TS 38.331 V16.3.1 (January 2021). 07 January 2021. See sections 5.7.8-5.7.8.2a. | 1-20 |
| A | US 2018-0359746 A1 (SAMSUNG ELECTRONICS CO., LTD.) 13 December 2018 (2018-12-13) See paragraphs [0092]-[0113]; and figure 3. | 1-20 |
| A | US 2019-0341992 A1 (QUALCOMM INCORPORATED) 07 November 2019 (2019-11-07) See paragraphs [0109]-[0110]; and figure 13. | 1-20 |

☐ Further documents are listed in the continuation of Box C.   ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **28 April 2022** | **02 May 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2022/000631**

| Patent document cited in search report | | | Publication date (day/month/year) | Patent family member(s) | | | Publication date (day/month/year) |
|---|---|---|---|---|---|---|---|
| WO | 2018-084331 | A1 | 11 May 2018 | US | 11172519 | B2 | 09 November 2021 |
| | | | | US | 2019-0357274 | A1 | 21 November 2019 |
| US | 2020-0314664 | A1 | 01 October 2020 | US | 11159956 | B2 | 26 October 2021 |
| | | | | US | 2022-0007208 | A1 | 06 January 2022 |
| US | 2018-0359746 | A1 | 13 December 2018 | KR | 10-2017-0055770 | A | 22 May 2017 |
| | | | | US | 10681694 | B2 | 09 June 2020 |
| | | | | WO | 2017-082642 | A1 | 18 May 2017 |
| US | 2019-0341992 | A1 | 07 November 2019 | CN | 112075036 | A | 11 December 2020 |
| | | | | EP | 3788727 | A1 | 10 March 2021 |
| | | | | US | 11139880 | B2 | 05 October 2021 |
| | | | | US | 2021-0384957 | A1 | 09 December 2021 |
| | | | | WO | 2019-212682 | A1 | 07 November 2019 |

Form PCT/ISA/210 (patent family annex) (July 2019)